(19) Europäisches Patentamt
European Patent Office
Office européen des brevets

(11) EP 3 093 792 B1

(12) FASCICULE DE BREVET EUROPEEN

(45) Date de publication et mention
de la délivrance du brevet:
**15.05.2019 Bulletin 2019/20**

(51) Int Cl.:
***G06K 7/08*** *(2006.01)*

(21) Numéro de dépôt: **16169031.8**

(22) Date de dépôt: **10.05.2016**

(54) **DISPOSITIF DE LECTURE D'INFORMATION ENREGISTRÉE SUR UN SUPPORT SOUS FORME DE CARACTÈRES MAGNÉTIQUES**

LESEGERÄT FÜR INFORMATIONEN, DIE AUF EINEM DATENTRÄGER IN FORM VON MAGNETISCHEN ZEICHEN GESPEICHERT SIND

DEVICE FOR READING INFORMATION RECORDED ON A SUPPORT IN THE FORM OF MAGNETIC CHARACTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2015 EP 15290127**

(43) Date de publication de la demande:
**16.11.2016 Bulletin 2016/46**

(73) Titulaire: **GIE i-datech**
**67300 Schiltigheim (FR)**

(72) Inventeurs:
• **BRUN, David**
**67000 STRASBOURG (FR)**
• **BAVOUX, Guillaume**
**67540 OSTWALD (FR)**
• **GIBB, Ian**
**CREWE, Cheshire CW1 6FA (GB)**
• **MURE, Michael**
**67300 SCHILTIGHEIM (FR)**

(74) Mandataire: **Kessler, Marc**
**Meyer & Partenaires**
**2 rue de Dublin**
**67300 Schiltigheim (FR)**

(56) Documents cités:
**EP-A2- 1 993 077      US-A- 5 054 092**
**US-A1- 2012 008 851**

EP 3 093 792 B1

**Description**

**Objet de l'invention**

La présente invention se rapporte au domaine des lecteurs d'une ou plusieurs informations enregistrées sur un support physique sous forme de caractères et/ou de symboles réalisés à l'aide d'une encre magnétique.

**Etat de la technique**

Il est bien connu d'enregistrer sur un support physique des informations, codées ou non, sous forme optique, sous forme par exemple de code-barres et/ou sous forme magnétique, par exemple sous forme de pistes magnétiques ou de caractères d'imprimerie et/ou de symboles dits « magnétiques » car réalisés à l'aide d'une encre magnétique.
Des supports comprenant des caractères ou des symboles magnétiques sont connus. Il peut s'agir, par exemple dans le domaine bancaire, de billets de banque, de titres de paiement, du type chèques ou ordres de virement, lettres chèques, mais il peut également s'agir de tout autre document, comme des titres de transport, des billets de concert, des chèques vacances, tickets restaurant ou contraventions.
Quel que soit le type de support physique sur lequel est apposé l'encre magnétique, il est connu d'utiliser un dispositif de lecture pour pouvoir lire et interpréter ladite information, dans ce cas le lecteur comprend des moyens de traitement de l'information.
De tels lecteurs présentent de nombreux inconvénients. Tout d'abord, ils sont généralement disposés à demeure à l'endroit où la lecture du support est nécessaire, ensuite ils sont encombrants et lourds, complexes et nécessitent un entretien constant. En effet, afin d'accomplir une lecture des caractères ou symboles magnétiques avec un fort taux de fiabilité, les dispositifs de lecture sont motorisés, ce qui permet de contrôler et d'optimiser la vitesse de passage du support pour obtenir un signal d'acquisition constant, régulier, donc facile à lire et éventuellement facile à décoder, si l'information contenue sur le support est codée.
Par exemple, le document EP 1 993 077 décrit un procédé et un lecteur de reconnaissance de caractères magnétiques, qui est motorisé. Le procédé de décodage des caractères magnétique comprend la génération d'une forme d'onde, qui est segmentée par parties d'ondes correspondant à un caractère magnétique, le comptage de crêtes du signal, pour compter le nombre de pics en fonction d'un seuil prescrit, puis la détermination d'intervalles entre chaque pic d'onde afin d'identifier le caractère par comparaison avec un tableau d'intervalles standards correspondant à un caractère particulier.
Le document US 5 054 092 décrit un lecteur manuel de documents comprenant des caractères imprimés à l'aide d'une encre magnétique, les documents étant transportés manuellement devant une tête de lecture magnétique, la vitesse réelle du passage du document dans le lecteur étant mesurée pendant l'opération de lecture par l'emploi d'une roue mise en mouvement par frottement avec le document transporté.
Ces solutions présentent l'inconvénient de ne pas être nomades.
Une solution nomade a été proposée par le document US2012/0008851. Ce dernier décrit l'utilisation d'un dispositif de lecture de caractères magnétiques comprenant une prise audio apte à être branchée sur le port audio d'un téléphone mobile, ou Smartphone, qui met en oeuvre une application pour communiquer avec une institution bancaire. Toutefois, ce dispositif n'est pas fiable en termes de restitution de l'information lue car le passage manuel d'un document, dans un tel dispositif, entraine une inconstance de la direction et de la vitesse de passage du document, notamment si ce dernier s'accroche dans le lecteur. Le codage de l'information étant spatial, des variations de vitesse induisent des variations temporelles sur le signal qui perturbent la restitution de l'information contenue sur le document. Par ailleurs, le plaquage du document au fond du lecteur n'est pas garanti. En particulier, cela veut dire que la partie du document comprenant des caractères ou symboles magnétiques peut s'éloigner de la tête de lecture et passer de travers, ce qui produit une perturbation du signal, qui s'en trouve fortement dégradé, ce qui rend le processus de restitution de l'information moins fiable.
Ainsi donc, il n'existe pas de solution nomade, avec entrainement manuel du document à lire, qui soit fiable et d'une utilisation aisée pour la lecture des caractères ou des symboles réalisés à l'aide d'une encre magnétique, et qui soit en particulier utilisable dans le domaine bancaire, et plus particulièrement pour le traitement de chèques ou des ordres de virement.

**Buts de l'invention**

La présente invention vise à fournir un dispositif de lecture d'une ou plusieurs informations enregistrées sur un support physique sous forme de caractères et/ou de symboles magnétiques, un terminal mobile de communication connecté à ou comprenant un tel dispositif, et une méthode de restitution de la ou plusieurs informations enregistrées sous la forme d'une chaîne de caractères et/ou de symboles magnétiques, mettant en oeuvre un tel dispositif et un terminal mobile de communication, qui ne présentent pas les inconvénients de l'état de la technique.

La présente invention vise à fournir une alternative aux solutions de l'état de la technique existantes.

La présente invention vise également à fournir un dispositif de lecture qui soit nomade, léger, fiable et facile d'utilisation.

La présente invention vise également à fournir un dispositif de lecture et une méthode de restitution de la ou plusieurs informations enregistrées sous la forme d'une chaîne de caractères et/ou de symboles magnétiques, mettant en oeuvre un tel dispositif et un terminal mobile de communication, un dispositif et une méthode dans lesquels le passage du document à lire se fait de façon manuelle, donc non motorisée, mais qui permette de restituer de manière fiable et améliorée l'information lue.

### Résumé de l'invention

La présente invention porte sur un dispositif de lecture d'une ou plusieurs informations imprimées sur un support physique sous la forme d'une chaîne de caractères et/ou de symboles magnétiques, le dispositif comprenant un boîtier muni d'une fente apte à recevoir le support, une tête de lecture magnétique, apte à lire la chaîne de caractères et/ou de symboles magnétiques lors du passage manuel du support dans la fente, la tête de lecture générant un signal électrique, comprenant des pics d'intensité, image des caractères et/ou symboles magnétiques, des moyens de connexion à un terminal mobile de communication, et le dispositif de lecture comprenant des moyens de restitution de l'information ou des informations, à partir du signal électrique, les moyens de restitution comprenant des moyens d'estimation de la vitesse de passage des caractères et/ou symboles magnétiques devant la tête de lecture à partir du signal électrique.

Selon des modes préférés de l'invention, le dispositif comprend au moins une, ou une combinaison quelconque appropriée, des caractéristiques suivantes :

- les moyens de restitution de la ou des informations imprimées sur le support comprennent des moyens de traitement comprenant des moyens de segmentation du signal électrique en une pluralité de segments correspondant à un caractère ou symbole lu et des moyens d'interprétation du signal électrique attribuant aux segments le caractère ou symbole lui correspondant effectivement,
- les moyens d'interprétation du signal évaluent statistiquement la correspondance la plus fiable à des empreintes de référence du ou des caractères et/ou symboles,
- l'empreinte comprend un ensemble de points caractéristiques de l'ensemble des pics d'intensité formant le segment du signal électrique,
- le support comprend une chaîne de caractères et/ou de symboles magnétiques du type CMC7,
- le dispositif comprend un élément, faisant saillie dans la fente du boiter et faisant office de ressort pour mettre en contact la partie du support physique comprenant la chaîne de caractères et/ou de symboles magnétiques avec la tête de lecture,

La présente invention porte aussi sur un terminal mobile de communication connecté à ou comprenant un dispositif de lecture d'une ou plusieurs informations imprimées sur un support physique sous la forme d'une chaîne de caractères et/ou de symboles magnétiques, ledit dispositif comprenant un boîtier muni d'une fente apte à recevoir le support, une tête de lecture magnétique, apte à lire la chaîne de caractères et/ou de symboles magnétiques lors du passage manuel du support dans la fente, la tête de lecture générant un signal électrique, comprenant des pics d'intensité, image des caractères et/ou symboles magnétiques, des moyens de connexion au terminal mobile, le terminal mobile et/ou le dispositif de lecture comprenant des moyens de restitution de l'information ou des informations imprimées sur le support physique, les moyens de restitution comprenant des moyens d'estimation de la vitesse du passage desdits caractères et/ou symboles magnétiques devant ladite tête de lecture à partir du signal électrique.

La présente invention porte également sur une méthode de restitution d'une ou plusieurs informations imprimées sur un support physique sous la forme d'une chaîne de caractères et/ou de symboles magnétiques, comprenant les étapes de prendre un dispositif de lecture d'une ou plusieurs informations imprimées sur un support physique sous la forme d'une chaîne de caractères et/ou de symboles magnétiques, ledit dispositif comprenant un boîtier muni d'une fente apte à recevoir le support, une tête de lecture magnétique, apte à lire ladite chaîne de caractères et/ou de symboles magnétiques lors du passage manuel du support dans la fente, la tête de lecture étant apte à générer un signal électrique, comprenant des pics d'intensité, image des caractères et/ou symboles magnétiques, et des moyens de connexion à un terminal mobile, prendre un terminal mobile de communication, apte à communiquer avec un ou plusieurs réseaux informatiques et/ou téléphoniques, connecter le dispositif avec le terminal mobile de communication, prendre un support physique comprenant une ou plusieurs informations enregistrées sous la forme d'une chaîne de caractères et/ou de symboles magnétiques, le passer manuellement dans la fente et devant la tête de lecture du dispositif de lecture, pour générer un signal électrique, comprenant des pics d'intensité, image des caractères ou symboles magnétiques, restituer l'information ou les informations comprise(s) dans le signal, en estimant, à partir du signal électrique, la vitesse de passage des caractères et/ou symboles magnétiques devant ladite tête de lecture.

Selon des modes préférés de l'invention, la méthode comprend au moins une, ou une combinaison quelconque appropriée, des caractéristiques suivantes :

- l'étape de restitution de l'information ou des informations comprises dans le signal électrique comprend une étape de traitement du signal électrique qui comprend sa segmentation en une pluralité de segments correspondants à un caractère ou symbole lu et une étape d'interprétation du signal électrique en attribuant aux segments le caractère ou symbole lui correspondant effectivement,
- l'étape d'estimation de la vitesse de passage des caractères et/ou symboles magnétiques devant la tête de lecture se fait en déterminant la vitesse locale au niveau d'un ou plusieurs pics du signal électrique, le filtrage des pics du signal électrique afin d'obtenir un signal filtré, puis en déterminant une nouvelle vitesse locale au niveau d'un ou plusieurs pics du signal filtré pour obtenir un nouveau signal filtré, les étapes de détermination de la vitesse locale et de filtrage du signal_électrique étant réalisées une multitude de fois,
- l'étape de l'interprétation du signal électrique comprend la segmentation du signal électrique en une pluralité de segments correspondants à un caractère ou symbole lu, la prise d'une empreinte, pour chaque segment, et la comparaison de l'empreinte à des empreintes de référence du ou des caractères et/ou symboles,
- l'empreinte est un ensemble de points caractéristiques de l'ensemble des pics d'intensité formant le segment du signal électrique,
- les caractères et/ou de symboles magnétiques sont du type CMC7,
- la méthode comprend en outre une étape de guidage du support à lire vers la tête de lecture du dispositif de lecture
- l'étape de restitution de l'information ou des informations est mise en oeuvre par le dispositif de lecture et/ou par le terminal mobile de communication.

## Brève description des figures

La figure 1 est une représentation schématique d'une vue de côté d'un premier mode de réalisation du dispositif selon l'invention.

La figure 2 est une représentation schématique d'une vue du dessus du dispositif selon l'invention selon le mode de réalisation représenté à la figure 1.

La figure 3 est une représentation schématique éclatée du dispositif selon l'invention selon le mode de réalisation représenté à la figure 1.

La figure 4 est une représentation schématique d'une partie du boîtier du dispositif selon l'invention selon le mode de réalisation représenté à la figure 1.

La figure 5 est une représentation schématique d'un caractère réalisé à l'aide d'une encre magnétique, codé selon la norme CMC7, et destiné à être lu par le dispositif selon l'invention.

La figure 6 est une représentation schématique du principe de codage du caractère représenté à la figure 6.

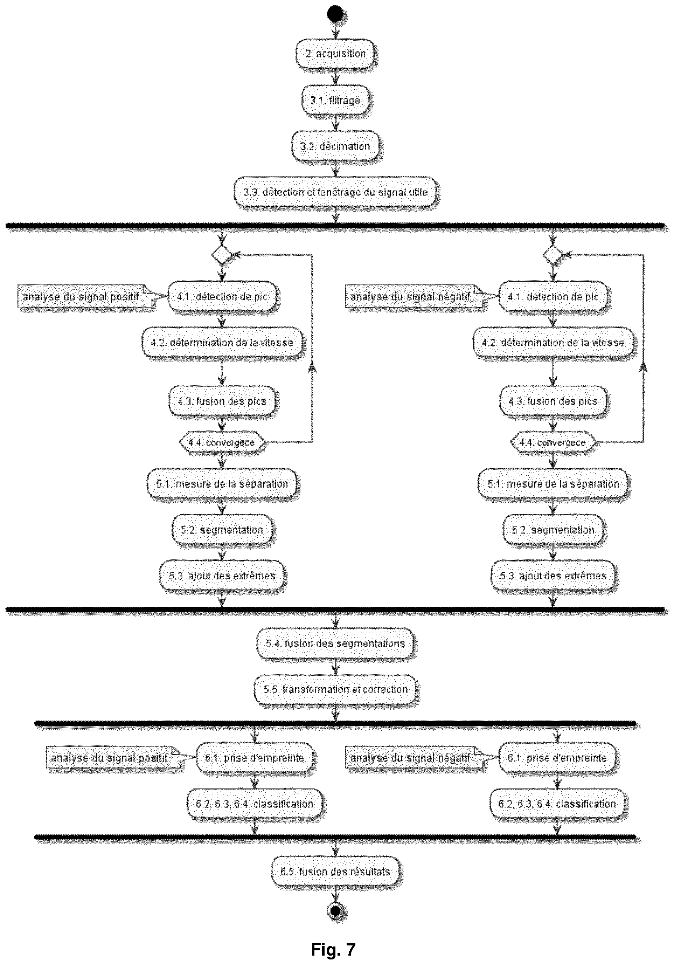

La figure 7 est une représentation schématique d'un mode de réalisation particulier de la méthode de restitution selon l'invention.

La figure 8 est une représentation schématique de l'estimation de la vitesse de passage du document à lire dans le dispositif selon l'invention.

La figure 9 est une représentation schématique de la distribution des distances mesurées entre les pics du signal.

La figure 10 est une représentation schématique du processus de segmentation.

La figure 11 est une représentation schématique du processus de fusion durant le processus de segmentation.

La figure 12 est une représentation schématique de la prise d'une empreinte d'un segment issu de la segmentation du signal généré par la lecture de l'information contenue sur un document.

La figure 13 est une représentation schématique du positionnement théorique des points caractéristiques de caractères codés selon la norme CMC7.

## Description détaillée de l'invention

Le dispositif 1 de lecture selon la présente invention est apte à lire une ou plusieurs informations enregistrées sur un support physique sous forme de caractères ou de symboles dits « magnétiques », car réalisés à l'aide d'une encre magnétique.

Le support physique est tout support adéquat, de préférence il s'agit d'un support papier, de forme, d'épaisseur, et de dimensions adéquates. De préférence, le support physique est un document bancaire, par exemple un titre de paiement, du type chèque, lettre chèque ou ordre de virement ; il peut également s'agir d'un chèque vacances, d'un titre restaurant, d'une contravention, d'un titre de transport, un billet de bus ou de métro, de train ou d'avion, un billet de concert.

Le support physique comprend une ou une pluralité d'informations enregistrées sous la forme de caractères d'imprimerie et/ou de symboles et/ou de signes, des figures ou des dessins, comme par exemple des codes-barres simples ou des codes-barres 2D, réalisés à l'aide d'une encre magnétique. De préférence, l'information ou les informations comprises sur le support physique sont codées.

Dans un mode de réalisation particulier de l'invention, le support physique comprend une ou une pluralité d'informations imprimées sous la forme de caractères d'imprimerie, ou de symboles, codés selon la norme CMC7 (Caractères Magnétiques Codés à sept bâtonnets) (ISO1004-2:2013) dans lequel les sept bâtonnets constituant un caractère ou un symbole sont de longueur variable de telle manière que l'ensemble des sept bâtonnets ait globalement la forme du signe considéré.

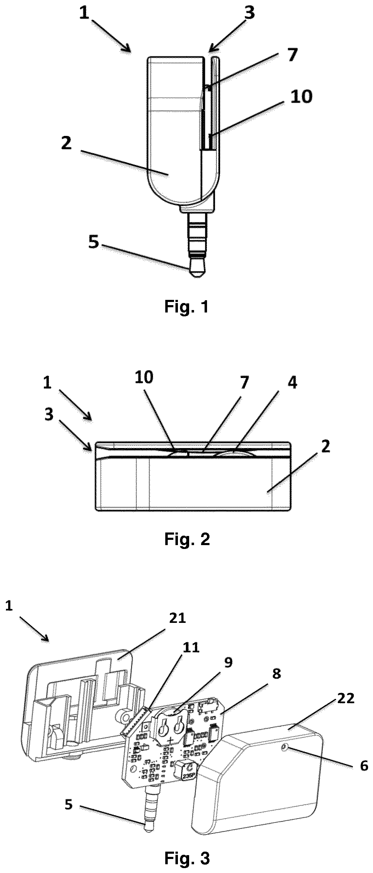

Le dispositif 1 de lecture selon la présente invention comprend un boîtier 2 (figures 1 à 4), de toutes dimensions adéquates et de forme adéquate, fait en tous matériaux adéquats, de préférence fait d'un matériau plastique. Avantageusement, le boîtier 2 est composé de deux parties distinctes 21 et 22, jointes l'une à l'autre par tous moyens adéquats.

Le boîtier 2 comprenant une fente 3 apte à recevoir le support physique et permet à l'information enregistrée sous forme magnétique d'être lue par des moyens de lecture affleurant une paroi de la fente 3 ou faisant saillie dans la fente 3.

La fente 3 est réalisée dans le boîtier 2 par tous moyens adéquats.

De préférence, le boîtier 2 comprend des moyens visuels 6 permettant de s'assurer que le dispositif 1 est actif. Avantageusement, il s'agit d'un voyant lumineux.

Le dispositif 1 de lecture selon la présente invention comprend en outre des moyens 5 de connexion à un ou plusieurs terminaux mobiles de communication, aptes à communiquer avec un ou plusieurs réseaux informatiques et/ou téléphoniques. De préférence, ces moyens comprennent des moyens de communication sans fil avec le ou les terminaux mobiles de communication, par exemple des moyens du type Bluetooth® (marque déposée) ou Wifi. Il peut également s'agir de moyens filaires, par exemple du type USB (Universal Serial Bus). Avantageusement, il s'agit d'une connexion du type Jack, de préférence un connecteur TRRS audio, de 3,5mm, qui présente l'avantage de permettre le transfert les informations du dispositif 1 au terminal mobile de communication sous la forme d'un ou plusieurs signaux analogiques faciles à traiter par le terminal mobile de communication.

De préférence, le dispositif 1 comprend un aimant 10 pour pré-magnétiser, avant lecture, les caractères ou les symboles réalisés à l'aide de l'encre magnétique et présents sur le support.

De préférence, le dispositif 1 comprend également des moyens de guidage du support physique, en particulier de l'information enregistrée sous forme magnétique vers la tête de lecture magnétique 4. Ces moyens présentent l'avantage d'améliorer la qualité de lecture de l'information portée par le document à lire.

Dans un mode de réalisation particulier de l'invention, ces moyens de guidage comprennent un élément 7 faisant office de ressort, obligeant le support physique à se plaquer contre la tête de lecture 4. Cet élément présente l'avantage de minimiser les interférences électromagnétiques. Il a une forme et des dimensions adaptées à la forme et aux dimensions du boiter 2 et de la fente 3 et il est fait de tous matériaux ou assemblage de matériaux adéquate. Avantageusement, il s'agit d'une lamelle, de préférence incurvée, avantageusement souple, s'étendant dans la fente 3 du boîtier 2, de préférence faite en un matériau amagnétique, par exemple en laiton ou en cuivre-béryllium. Une telle lamelle présente l'avantage d'être facile de mise en oeuvre, de permettre un plaquage d'une grande partie du support physique contre la tête de lecture 4 et de minimiser les interférences électromagnétiques.

Dans un autre mode de réalisation particulier de l'invention, ces moyens de guidage mettent en jeu un circuit électronique 8 du dispositif 1, qui est monté mobile dans le boîtier 2 et couplé à un ressort plat au dos, par exemple du type lame de ressort ou du type cage à ressort. Ainsi, la tête de lecture 4, de préférence solidaire du circuit, est mobile et imprime un léger mouvement de translation qui, couplé au ressort préchargé, permet de générer un effort d'appui du support sur la tête de lecture 4. Si, dans ce mode de réalisation, les moyens 5 de connexion à un ou plusieurs terminaux mobiles de communication sont du type prise Jack, le connecteur jack est désolidarisé du circuit électronique 8 et la connexion peut se faire par nappe. Dans un autre mode de réalisation de ces moyens de guidage, seulement la tête de lecture 4 est mobile, par exemple sur une cage à ressort et connectée par nappe au circuit 8.

De préférence, le circuit électronique 8 comprend une prise de connexion 11 permettant de paramétrer un ou une pluralité de composants, un ou plusieurs microcontrôleurs, du circuit électronique 8. Dans un autre mode de réalisation de l'invention, les composants, ou microcontrôleurs, du circuit électronique 8 sont paramétrés avant leur installation sur le circuit électronique 8.

Quel que soit le mode de réalisation considéré, le dispositif 1 comprend, de préférence, également des moyens 9 d'alimentation en électricité des moyens de lecture et avantageusement également des composants du circuit électronique 8. Dans un autre mode de réalisation, l'alimentation électrique nécessaire au fonctionnement du dispositif 1 selon l'invention provient du terminal mobile de communication auquel le dispositif 1 peut se connecter. Eventuellement, les moyens 9 d'alimentation en électricité peuvent compléter l'alimentation électrique provenant du terminal mobile de communication si la puissance de ce dernier n'est pas suffisante.

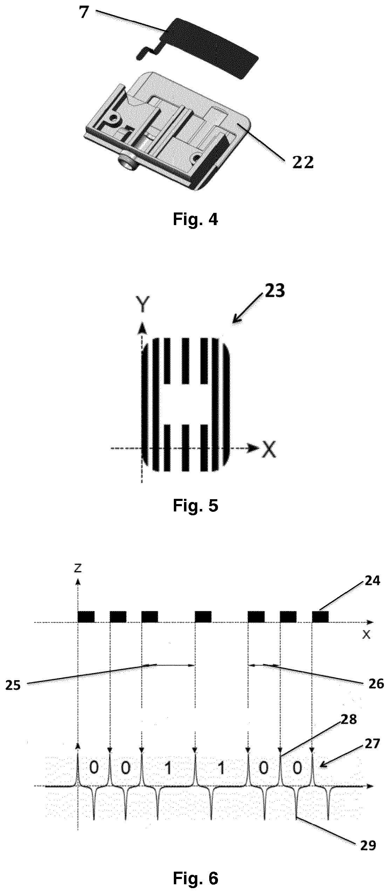

Les moyens de lecture, du dispositif 1 selon la présente invention, comprennent une tête de lecture 4, affleurant une des parois de la fente 3 ou faisant saillie vers la fente 3, apte à lire des caractères ou symboles réalisés à l'aide d'une encre magnétique, avantageusement des caractères ou symboles codés selon la norme CMC7 ou E13B. La tête de lecture 4 permet l'acquisition de l'information présente sur le support en captant le champ magnétique rémanent des particules chargées contenues dans l'encre. L'information est ensuite transformée en un signal électrique 27, qui est l'image du champ magnétique mesuré, et qui fera l'objet d'un traitement approprié pour permettre le décodage de l'information. Le signal électrique 27 comprend une série de pics alternativement positifs 28 et négatifs 29 (figure 6) et correspondent à des fronts montants et descendants engendrés par l'alternance de brusques changements des zones magnétiques et non magnétiques formant un caractère ou un symbole réalisé à l'aide de l'encre magnétique. Ainsi, l'espacement de ces pics renseigne sur l'espacement des segments composant le caractère ou le symbole, et permet ainsi l'identification du caractère ou du symbole lu par la tête de lecture 4.

À titre d'exemple, pour un caractère et/ou un symbole codé selon la norme CMC7 (figure 5), le signal électrique 27 généré par la lecture du caractère comprend sept segments 24 (figure 6) pouvant être espacés selon deux valeurs normées distinctes, soit un intervalle long 25, soit un intervalle court 26. Par ailleurs, chaque caractère est composé de deux intervalles longs et quatre intervalles courts, chaque caractère étant séparé d'un autre par un intervalle supérieur à l'intervalle long.

Le dispositif 1 peut comprendre en outre des moyens d'amplification du signal électrique 27 généré par la tête de lecture 4. De préférence, ces moyens comprennent un circuit, ou partie d'un circuit, électronique dédié à cette fonction, et comprenant comme composants, par exemple, des amplificateurs opérationnels et amplificateurs d'instrumentation.

Le dispositif 1 peut comprendre en outre des moyens de conversion analogique-numérique du signal électrique 27 amplifié, en un signal numérique. De préférence, ces moyens de conversion comprennent ou mettent en oeuvre des composants électroniques, ou microcontrôleurs ou microprocesseurs ou circuits logiques programmables. Avantageusement, ces moyens comprennent un échantillonneur-bloqueur et un convertisseur analogique-numérique à proprement parler. L'échantillonneur-bloqueur peut être précédé d'un filtre anticrènelage, ou anti-repliement, permettant de supprimer les parties du signal qui ne contiennent aucune information pertinente. Toutefois, il est également possible que ces moyens de conversion analogique-numérique soient compris dans les moyens de connexion du terminal mobile de communication ou soient compris dans le terminal mobile de communication.

Selon que le dispositif 1 selon l'invention est connecté ou pas à un terminal mobile de communication, le dispositif 1 comprend en outre, ou met en oeuvre, des moyens de restitution de ladite ou lesdites informations comprises sur le support physique, à partir dudit signal électrique 27. Ces moyens comprennent des moyens d'estimation de la vitesse de passage du support physique à lire dans la fente 3 du boitier 2 ou d'estimation de la vitesse de lecture des caractères et/ou symboles magnétiques devant la tête de lecture 4, des moyens de traitement du signal 27 et des moyens d'interprétation du signal.

Les moyens d'estimation de la vitesse présentent l'avantage de permettre d'améliorer la qualité de restitution de l'information à lire, une restitution pouvant se réaliser quelle que soit la vitesse, ou les variations de vitesse de lecture des caractères et/ou symboles magnétiques par ladite tête de lecture 4. En particulier, ces moyens présentent l'avantage de permettre un meilleur filtrage du signal issu de la tête de lecture 4 et une meilleure segmentation dudit signal pour une meilleure identification du caractère ou symbole lu.

A ces fins, le dispositif 1 selon l'invention et/ou un terminal de communication apte à être connecté avec ledit dispositif 1, peuvent comprendre tout ou partie desdits moyens.

Dans un mode de réalisation particulier de l'invention, et pour un support physique comprenant des caractères magnétiques du type CMC7, les moyens d'estimation de la vitesse de lecture du support s'appliquent sur la partie positive 28 et/ou la partie négative 29 du signal 27. Ces moyens comprennent des moyens de détection de pics dans le signal 27, éventuellement amplifié, et converti en signal numérique, et des moyens de détermination de la vitesse locale au niveau d'un ou plusieurs pics du signal 27.

Ces moyens de détermination de la vitesse locale permettent de transformer des temps en distances, et permettent le nettoyage du signal 27 en appliquant un seuil de distances entre deux pics, ce qui permet d'éliminer les défauts du signal 27, comme par exemple des double pics, causés par un passage de travers du support dans le dispositif 1 selon l'invention ou par une bande de caractères et/ou de symboles imprimée de travers et des faux pics causés par une tâche d'encre, un parasite électromagnétique, un défaut électronique ou un choc sur le lecteur. Un signal 27 nettoyé permet une nouvelle mesure de vitesses afin d'affiner la détermination de la vitesse du passage du support dans le dispositif 1.

Ces moyens de détermination de la vitesse locale sont de préférence mis en oeuvre plusieurs fois de façon répétitive ou itérative.

Les moyens de restitution de l'information ou des informations du support comprennent des moyens de segmentation du signal 27, éventuellement amplifié, et converti en signal numérique, afin de déterminer chaque zone du signal 27 comprenant un caractère et/ou symbole.

Dans le signal 27, la séparation entre un intervalle long et un intervalle inter-caractère n'étant généralement pas définie, ce qui est le cas en particulier pour les caractères ou symboles codés selon la norme CMC7, les moyens de segmentation permettent, grâce à la détermination de la vitesse locale faite par les moyens d'estimation de la vitesse, de calculer des distances correspondant aux intervalles longs, courts, et inter-caractères. Ces distances sont collectées et classées afin d'obtenir une distribution des trois types d'intervalles, qui va ainsi permettre de déterminer la distance des intervalles les plus longs correspondant aux intervalles inter-caractères, une distance qui sera utilisée comme seuil à partir duquel on peut considérer que l'on passe d'un caractère ou symbole à l'autre. Ceci permet de segmenter de façon plus précise le signal 27 en une pluralité de segments correspondant à un caractère ou symbole.

De préférence, les moyens de segmentation introduisent dans le signal 27 une séparation de début et une de fin afin d'isoler le premier et le dernier caractère.

De préférence, les moyens de segmentation sont mis en oeuvre sur les pics positifs 28 du signal 27 ; toutefois, ils peuvent également l'être sur les pics négatifs 29. Leur mise en oeuvre à la fois sur les pics positifs 28 et négatifs 29 présente l'avantage d'obtenir une segmentation du signal 27 de meilleure qualité.

Les moyens d'interprétation du signal 27 permettent d'attribuer à chaque segment du signal 27 un caractère ou symbole qui lui correspond effectivement. Ces moyens permettent également de regrouper les informations correspondantes à chaque caractère et/ou symbole interprété pour former une chaîne de caractères et/ou de symboles qui peut être transmise à un dispositif distinct du dispositif de lecture 1, comme par exemple un dispositif, appareil ou système distant, pour un traitement ultérieur adéquat.

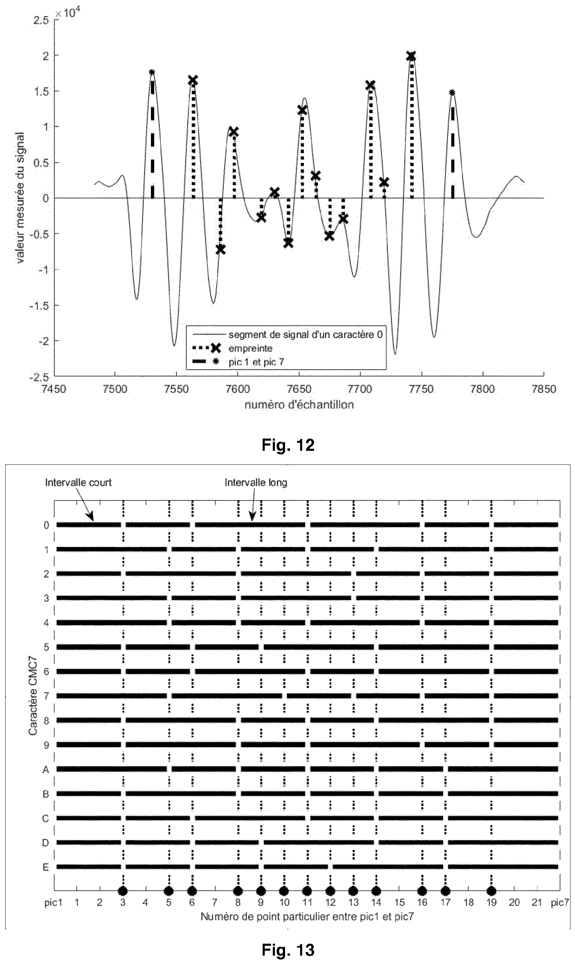

Les moyens d'interprétation du signal 27 comprennent des moyens de prise d'une « empreinte » de chaque segment (figure 12), c'est-à-dire un ensemble de N points caractéristiques des pics d'intensité de chaque segment du signal 27, et fournissent, de préférence, pour chaque segment, une pluralité d'empreintes. Ils comprennent également des moyens d'attribuer à chaque empreinte un caractère ou symbole, de préférence en comparant l'empreinte de chaque segment du signal 27 à des empreintes de référence.

Les moyens de restitution de l'information peuvent comprendre en outre des moyens de filtrage, des moyens de décimation et/ou des moyens de détection du signal utile.

Les moyens de filtrage permettent de nettoyer le signal 27 du bruit pouvant potentiellement le polluer, et en particulier le bruit de l'alimentation électrique du dispositif 1. De préférence, il s'agit d'un filtrage numérique passe bas, par exemple de type Butterworth d'ordre 4 avec une fréquence de coupure de 2000Hz.

Les moyens de décimation sont aptes à réduire la fréquence d'échantillonnage, qui est fixée par exemple à 44100Hz, ce qui permet de réduire l'occupation mémoire du signal 27, de réduire son temps de traitement et d'augmenter la fiabilité de la détection des pics. De préférence, les moyens permettent la sélection d'un échantillon sur N du signal 27 acquis, N étant un entier positif, afin de pouvoir diviser par N l'occupation mémoire et le temps de traitement. On obtient une fréquence d'échantillonnage de 1/N de la fréquence d'échantillonnage initiale. Dans un mode préféré de réalisation de l'invention, N est égal à 4, ce qui permet de diviser par quatre l'occupation mémoire et le temps de traitement. On obtient ainsi une fréquence d'échantillonnage de 11 025Hz pour une fréquence d'échantillonnage initiale de 44100 Hz. Cette réduction de la fréquence d'échantillonnage est en soit un deuxième filtre passe-bas, ici de fréquence de coupure 11025/2 = 5512.5Hz et augmente la fiabilité de la détection de pics dans le signal 27.

Les moyens de détection du signal utile permettent de détecter et découper le signal utile, c'est-à-dire la section du signal 27 qui correspond au passage des caractères ou symboles devant la tête de lecture 4. En particulier, ces moyens permettent d'ignorer les pics résultant de bruits parasites qui pourraient être dus à des chocs mécaniques lors du passage du support d'information par exemple. Le découpage de la partie utile du signal 27 peut être réalisé par détection de passage au-delà d'un seuil prédéfini, afin de distinguer le bruit environnant. Une autre méthode peut consister à déclencher manuellement le début et la fin de l'acquisition du signal 27 par l'utilisateur, avant et après passage du support d'information.

De préférence, les moyens de détection du signal utile découpent le signal 27 en fenêtres d'une durée supérieure à l'intervalle séparant les différents groupements de caractères ou symboles, afin de s'assurer que l'intégralité des caractères ou symboles aient été enregistrés. Dans un mode préféré de réalisation, la durée des fenêtres est fixe. Le seuil de comparaison, qui est fonction du niveau de bruit moyen, est estimé à partir d'un court enregistrement de signal, dès le démarrage du dispositif 1 et de l'application mobile, avant le passage du support d'information. Par exemple, une durée de 0,2 seconde est choisie car étant supérieure à la durée de passage d'un espace inter-caractère ; Une valeur trop élevée produirait un mauvais découpage en gardant les défauts mentionnés précédemment. A chaque fenêtre d'acquisition, on associe la valeur absolue maximum du signal détecté. Ces valeurs sont comparées à un seuil prédéterminé. Quand une série de fenêtres valides suffisamment longue est trouvée (tableau 1), la section correspondante du signal 27 est alors interprétée pour restituer l'information contenu dans le signal 27.

Tableau 1 :

| N° de Fenêtre | Valeur absolue maximum du signal | Comparaison au seuil |
|---|---|---|
| 0 | 1015,9 | - |
| 1 | 765,0 | - |
| 2 | 834,9 | - |
| 3 | 868,4 | - |
| **4** | **11595,6** | + |
| **5** | **16455,6** | + |
| **6** | **21648,6** | + |
| **7** | **22039,5** | + |
| **8** | **27423,8** | + |
| **9** | **29185,5** | + |
| 10 | 829,0 | - |
| 11 | 836,9 | - |
| *12* | *17532.7* | + |
| 13 | 781,0 | - |
| 14 | 820,7 | - |

De préférence, les moyens d'interprétation du signal 27 comprennent des moyens de contextualisation du décodage par l'utilisation de la connaissance de l'emplacement du caractère et/ou du symbole dans la chaîne de caractères et/ou de symboles. Par exemple, dans le cas de caractères et/ou symboles codés selon la norme CMC7, pour restreindre les caractères possibles lors de la classification. Par exemple, le premier caractère lu est forcément un caractère de contrôle auquel sera associé uniquement un caractère de contrôle à l'empreinte. Ces moyens constituent une aide aux moyens de restitution et une optimisation du temps de traitement. En outre, ces moyens présentent l'avantage de pouvoir extrapoler la meilleure interprétation possible du signal et ainsi pouvoir traiter de façon fiable le signal électrique 27 qui comporterait des altérations.

De préférence, les moyens de restitution de l'information comprennent des moyens de contrôle de l'interprétation du signal 27.

Pour un document bancaire, par exemple un chèque, ces moyens sont aptes à calculer, un nombre à deux chiffres, une somme de contrôle, appelée « checksum », basée sur un calcul modulo 97 de l'ensemble de la chaîne de caractères et à comparer cette somme calculée au chiffre apposé sur le document bancaire entre les symboles «< >» ou « ( ) », et communiqué à ces moyens par l'utilisateur du dispositif 1, qui aura saisi manuellement ledit chiffre. En effet, un document bancaire, comme un chèque, comporte généralement un numéro à deux chiffres ou « somme de contrôle » qui est calculée de la manière suivante : les chiffres constituant le code banque, le code agence et le numéro de compte forme un nombre « N » de 31 chiffres. Ce nombre « N » est multiplié par 100 est donne un nombre « N' ». Ce nombre « N' » est divisé (au sens de la division euclidienne) par 97 et le reste de cette division est soustrait au nombre « 97 ». Le résultat de cette soustraction représente la clé de contrôle dite clé «RLMC» (Recomposition de la Ligne Magnétique du Chèque) et ne peut prendre que les valeurs de 01 à 97.

De préférence, les moyens de conversion analogique-numérique du signal électrique amplifié, les moyens d'estimation de la vitesse de passage du support dans le dispositif 1, les moyens de traitement du signal 27, y compris les moyens de segmentation, les moyens de filtration, de décimation, de détection du signal utile, et les moyens d'interprétation du signal 27, comprennent et/ou sont mis en oeuvre à l'aide et/ou utilisent un ou plusieurs micro-processeurs ou microcontrôleurs ou circuits logiques programmables, par exemple du type FPGA, PLD, EPLD, CPLD, PAL, PLA, avantageusement en coopération avec une mémoire du type ROM ou RAM. Dans un mode de réalisation particulier, ces moyens sont mis en oeuvre au sein d'un circuit électronique 8, avantageusement logé dans le boîtier 2 ; nanmoins, dans un autre mode de réalisation préféré, ces moyens sont mis en oeuvre par le terminal mobile de communication auquel le dispositif 1 de lecture est associé. Dans ce mode de réalisation particulier, l'information lue par la tête de lecture 4 est, de préférence, amplifiée et transmise au terminal mobile de communication pour la mise en oeuvre des autres moyens de traitement du signal.

Le ou les terminaux mobiles de communication comprennent des moyens de réception de l'information lue par la tête de lecture 4 du dispositif 1 selon l'invention et des moyens de communication via un ou plusieurs réseaux de communication, de préférence de communication informatique et/ou téléphonique. Si ladite information n'a pas encore été amplifiée, convertie en signal numérique, ni traitée, ni interprétée, le ou les terminaux mobiles de communication peuvent comprendre des moyens adéquats pour le faire, en particulier des moyens d'amplification du signal électrique 27 issu de la tête de lecture, des moyens de conversion analogique-numérique du signal électrique 27 amplifié, des moyens d'estimation de la vitesse de passage du support dans le dispositif 1 selon l'invention, des moyens de traitement du signal 27 numérique et des moyens d'interprétation du signal 27. Tout ou partie de ces moyens peuvent être ou comprendre des ressources matérielles (hardware) telles que décrites précédemment et/ou être ou comprendre des moyens logiciels.

Le ou les terminaux mobiles de communication peuvent être un téléphone mobile, un Smartphone, une tablette numérique, une phablette, ou un ordinateur portable.

Le dispositif 1 selon l'invention présente l'avantage d'être d'une utilisation aisée. Il est nomade et permet une lecture manuelle, rapide et fiable de l'information enregistrée sous forme magnétique. Il présente également l'avantage de permettre une lecture fiable quelle que soit la vitesse, ou les variations de vitesse, de passage du support physique.

L'utilisation du dispositif 1 selon l'invention est simple. L'utilisateur connecte le dispositif 1 à son terminal mobile de communication et éventuellement charge le logiciel ou l'application sur ledit terminal mobile. Il introduit et glisse manuellement le support physique ou le document, un chèque par exemple, dans la fente 3 du dispositif 1, en veillant à ce que l'information contenue sous forme magnétique soit positionnée en face de la tête de lecture 4 disposée dans la fente 3 du dispositif. De préférence, l'utilisateur passe manuellement le support physique d'un coté à l'autre du dispositif 2, au travers de la fente 3. Ensuite le dispositif 1 génère un signal suite à la lecture des caractères ou symboles magnétiques présents sur le support, un signal 27, éventuellement amplifié, numérisé, transmis au terminal mobile de communication qui se charge de le traiter, de préférence aux moyens de logiciels, et de le communiquer à un système distant via un réseau de communication informatique et/ou téléphonique, soit le dispositif 1 traite ledit signal 27 avant une transmission au terminal mobile de communication qui se charge ensuite de la transmission au système distant.

La méthode de lecture d'une ou plusieurs informations imprimées sur un support, sous la forme d'une chaîne de caractères et/ou de symboles imprimés avec une encre magnétique, de préférence codés selon la norme CMC7, met en oeuvre le dispositif 1 tel que décrit précédemment et comprend les étapes de prendre le dispositif 1 selon l'invention, le connecter, par les moyens de communication filaires ou sans fil, à un ou plusieurs terminaux mobiles de communication, aptes à communiquer avec un ou plusieurs réseaux informatiques et/ou téléphoniques, prendre un support comprenant une chaîne de caractères et/ou de symboles imprimés avec une encre magnétique, de préférence codés selon la norme CMC7, passer manuellement le support au travers de la fente 3 du boîtier 2.

De préférence, la méthode comprend une étape de pré-magnétisation des caractères ou symboles avant leur lecture par la tête de lecture et ou une étape de guidage du support pour le plaquer contre la tête de lecture.

La méthode comprend la lecture, par la tête de lecture 4, des caractères et/ou symboles magnétiques pour générer un signal 27 électrique comprenant des pics d'intensité, qui est l'image du champ magnétique mesuré, un signal 27 qui est interprété par des moyens de restitution de l'information ou des informations comprise(s) dans la chaîne de caractères et/ou symboles.

De préférence, la méthode comprend en outre une étape d'amplification du signal électrique 27, qui, une fois amplifié, subit une conversion analogique-numérique afin d'obtenir un signal échantillonné et quantifié.

L'étape de restitution de l'information contenue dans le signal 27 comprend une étape d'estimation de la vitesse passage du support physique à lire dans la fente 3 du boîtier 2 ou d'estimation de la vitesse de lecture des caractères et/ou symboles magnétiques devant la tête de lecture 4, une étape de traitement et une étape d'interprétation du signal 27.

L'étape d'estimation de la vitesse est réalisée par les moyens du dispositif 1 selon l'invention, décrits précédemment. Elle comprend, de préférence, un ou plusieurs cycles de détection des pics positifs et/ou négatifs sur l'intégralité du signal 27, une détermination de la vitesse locale au niveau d'un ou plusieurs pics du signal 27 et un nettoyage dudit signal 27.

L'étape de détection des pics se fait par rapport à un seuil S, d'une valeur comprise entre 0 et la valeur minimum présente dans le signal 27. Des échantillons sont sélectionnés dans le signal 27, de telle manière que les échantillons précédents et suivants soient supérieurs à l'échantillon sélectionné et que la valeur de l'échantillon soit inférieure au seuil S. Si le nombre de pics trouvés est inférieur à NB_PEAK, ce processus est répété jusqu'à un nombre maximum N de fois en rapprochant progressivement le seuil S de 0, avec : $NB_{peak} = N_{car} \times 7$, $N_{car}$ étant le nombre de caractères et 7 étant le nombre pics contenu dans un caractère CMC7 (norme CMC7 ISO 1004-2:2013). Pour une bande MICR, $N_{car} = 35$ et $NB_{peak} = 35 \times 7 = 245$ pics. Par exemple, le seuil S est fixé à 0,3 x min(signal), avec min(signal) étant la valeur minimum du signal, permettant de placer ledit seuil S entre la valeur 0 et la valeur des pics. Le seuil S est réduit de 20% à chaque itération.

La détermination de la vitesse locale au niveau d'un ou plusieurs pics du signal 27, se fait, par exemple pour des caractères ou symboles codés selon la norme CMC7, par l'application d'une fenêtre glissante bloquée d'une largeur de N pics sur la collection de pics issue du signal 27, en particulier de la partie utile du signal 27, avec N représentant le nombre de pics (N = M x 7 + 1) et étant compris entre 1 et $N_{max}$ ($N_{max}$ = $N_{car}$ x 7 + 1) et M étant le nombre de caractères compris entre 1 et $N_{car}$ (nombre de caractères de la piste). Ainsi, pour une estimation de vitesse au pic d'indice 0, on sélectionne une fenêtre allant des indices 0 à N-1. Pour une estimation de vitesse au pic d'indice X, on sélectionne une fenêtre allant des indices (X-(N-1)/2) à (X+(N-1)/2). Pour une estimation de vitesse au pic d'indice $N_{max}$, on sélectionne une fenêtre allant des indices $N_{max}$- N + 1 à $N_{max}$. Pour chaque sélection de N pics, les N-1 = M x 7 intervalles de temps séparant les pics sont calculés et triés par ordre croissant, les intervalles de temps correspondant à la différence des indices des pics détectés divisée par la fréquence d'échantillonnage. Ces M x 7 intervalles correspondent théoriquement à M x 4 intervalles courts + M x 2 intervalles longs + M intervalles inter-caractères. Le calcul de vitesse est effectué d'après les intervalles courts (ratio distance/temps) rencontrés dans chaque fenêtre car ils sont les plus nombreux et offrent une meilleure robustesse par rapport aux défauts induits par la détection de pics. Parmi chaque collection de M x 7 intervalles calculés et triés pour chaque fenêtre, on sélectionne les Y intervalles centrés sur la plage comprise entre 0 et « M x 4 - 1 » premiers intervalles pour effectuer le calcul de vitesse. Le calcul de vitesse est effectué selon la formule :

$$V = (Y \times \textit{distance\_intervalle\_court}) / (\Sigma \textit{ intervalles\_courts\_sélectionnés}),$$

avec V en m/s et *distance_intervalle_court* = 0,3 mm pour la norme CMC7 ISO 1004-2:2013.

Par exemple, on prend M = 2 caractères, donc N = 15 pics. Pour la vitesse au pic 0, on sélectionne les pics 0 à 14. Pour la vitesse au pic 50, on sélectionne les pics 50-7=44 à 50+7=57. Pour la vitesse au dernier pic N, on sélectionne les pics N-14 à N. De cette collection de 15 pics, on déduit une collection de 14 intervalles (en nombre d'échantillons) entre ces pics et on calcule l'intervalle de temps correspondant, avec une fréquence d'échantillonnage de 11025 Hz. Dans cette collection de 14 intervalles, on a théoriquement 8 intervalles courts, 4 intervalles longs et 2 intervalles inter-caractères. Pour déterminer la vitesse, on trie et on sélectionne les Y = 4 échantillons centrés sur la plage de 0 à 7, c'est-à-dire les échantillons 2 à 5 (Tableau 2).

Tableau 2 :

| Indice | Intervalle *(en nombre d'échantillons entre chaque pic)* | Intervalle *(en millisecondes)* |
|---|---|---|
| 0 | 43 | 3,900 |
| 1 | 44 | 3,991 |
| **2** | **47** | **4,263** |
| **3** | **48** | **4,354** |
| **4** | **49** | **4,444** |
| **5** | **50** | **4,535** |
| 6 | 51 | 4,626 |
| 7 | 53 | 4,807 |
| 8 | 75 | 6,803 |
| 9 | 77 | 6,984 |
| 10 | 78 | 7,075 |
| 11 | 86 | 7,800 |
| 12 | 148 | 13,424 |
| 13 | 166 | 15,057 |

La vitesse est ensuite déterminée avec la formule suivante :

$$V = (Y \times \textit{distance\_intervalle\_court}) / (\Sigma \textit{ intervalles\_courts\_sélectionnés}), \text{ soit } 0,068 \text{ m/s}$$

pour les valeurs du tableau 2. Ainsi, dans l'exemple ci-dessus, une vitesse locale a été obtenue. Le traitement est répété pour chaque pic trouvé dans le signal et une courbe de vitesse est obtenue sur l'ensemble du signal.
La détermination de la vitesse locale de l'étape précédente permet de déterminer des distance entre des pics du signal 27 et permet ainsi le nettoyage de ce dernier, en parcourant les pics de manière chronologique et, quand est détecté une paire de pics situés à une distance inférieure à un seuil de fusion, compris entre 0 et la distance d'un intervalle court pour un caractère CMC7, cette paire de pics est remplacée par un unique pic à la position moyenne et avec une vitesse qui est la moyenne de la vitesse des deux pics. De préférence, le seuil utilisé est compris entre « 0,5 x *distance_intervalle_court* » et « 0,66 x *distance_intervalle_court* ».

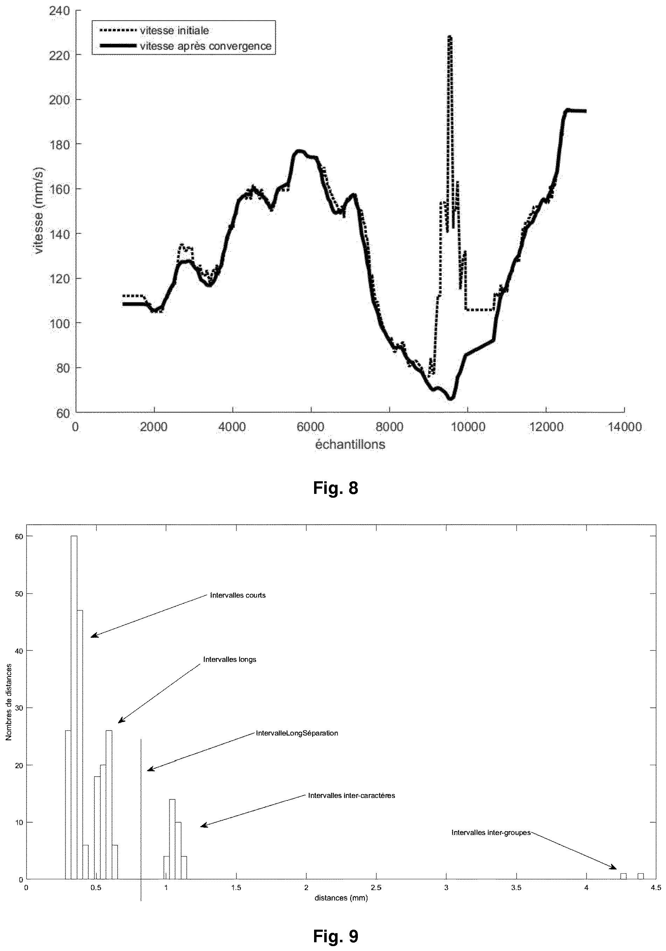

A l'issue du nettoyage des pics du signal 27, une nouvelle détermination de la vitesse locale est effectuée, cette dernière étant plus précise que la précédente. Ce cycle de détermination de la vitesse, lissage du signal et fusion des pics est répété un nombre entier fini et strictement positif de fois en devenant progressivement plus agressif lors de la fusion des pics, c'est-à-dire en faisant varier le seuil de fusion. La répétition de ce cycle permet ainsi d'affiner la détermination de la vitesse (figure 8).

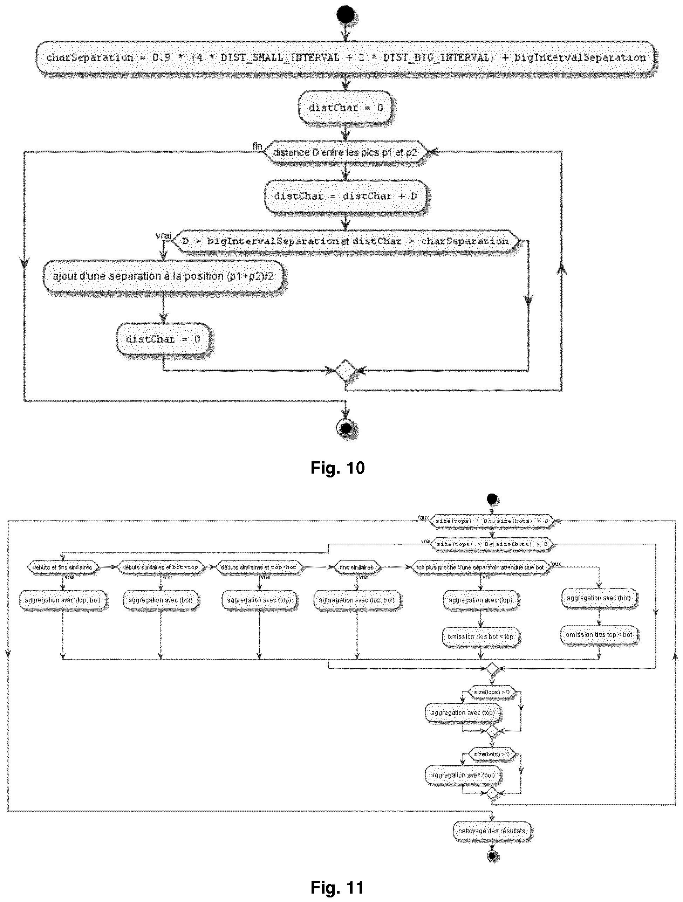

L'étape de traitement du signal 27 comprend la segmentation, le découpage, de ce dernier afin d'isoler chaque caractère ou symbole contenu dans ledit signal 27 (figure 10). A partir des pics du signal 27, et grâce à la détermination de la vitesse de passage du support devant la tête de lecture 4, une collection de distances est déduite, de préférence selon la formule suivante : $D_n = ((P_{n+1} - P_n)/2) \times ((V_{n+1} + V_n)/F_s)$, avec n étant l'indice du pic considéré, D la distance, V la vitesse, P la position du pic et $F_s$ la fréquence d'échantillonnage, de préférence une fréquence d'échantillonnage décimée (11025Hz). Les distances calculées sont ensuite triées pour sélectionner la portion correspondant aux intervalles longs.

Dans le cas de caractères codés selon la norme CMC7, si N est le nombre de distances trouvées et M étant le nombre de distances attendues pour la séquence de caractères lue ($M = N_{car} \times 7$), on s'attend alors à trouver :

- un nombre d'intervalles court : $NB_{Court} = (N \times N_{car} \times 4) / M$
- un nombre d'intervalles long : $NB_{Long} = (N \times N_{car} \times 2) / M$
- un nombre d'intervalles inter caractères : $NB_{InterCar} = (N \times (N_{car} - NB_{group}) / M$, $NB_{group}$ correspondant au nombre de zones distinctes composant la séquence de caractères ou symboles. Par exemple, pour un chèque, $N_{car}=35$, $NB_{group} = 3$.

La distance entre les caractères n'étant pas fixe, ni connue, un seuil est déterminé afin de distinguer les intervalles inter-caractères des autres intervalles. Le seuil est déterminé en prenant la moyenne (dénommée *IntervalleLongSéparation*) entre une valeur estimée être un intervalle long, par exemple déterminée par la formule $NB_{Court}$ + $(1-X) \times NB_{Long}$, et une valeur estimée être un intervalle inter-caractères, par exemple par la formule $NB_{Court} + NB_{Long}$ + $X \times NB_{InterCar}$, X étant compris entre 0 et 1.

Un exemple de détermination des distances des différents intervalles est représenté à la figure 9, avec X = 0,25.

Un seuil (dénommé *CaractSéparation*) est déterminé, au-delà duquel la distance est considérée comme suffisamment grande pour correspondre à un caractère, une segmentation du signal 27 est effectué en parcourant la liste des pics du signal 27. La liste des distances entre les pics est parcourue et une séparation est placée au centre de l'intervalle lorsque ce dernier est supérieur au seuil dénommé *IntervalleLongSéparation* et la distance depuis la dernière séparation placée est supérieure seuil dénomé *CaractSéparation.*

Des séparations de début et de fin du signal 27 sont ajoutées afin de segmenter le premier et le dernier caractère. La première séparation est ajoutée à la position : $Pic_1$ - *IntervalleLongSéparation* x $vitesse_1$ et la dernière séparation est ajoutée à la position $Pic_{max}$ + *IntervalleLongSéparation* x $vitesse_{max}$.

La liste des points de séparation dans le signal 27 est transformée ensuite en une liste de segments définis par une position de début et une position de fin. Une passe de correction est effectuée ensuite pour supprimer les segments dans lesquels moins de trois pics ont été trouvés pendant l'étape de détermination de la vitesse.

La segmentation est de préférence réalisée sur les pics positifs 28 et les pics négatifs 29 du signal 27, et aboutit à deux listes de segments appelées respectivement « bots » et « tops ». Puis ces deux segmentations résultantes sont fusionnées en une unique segmentation, valable pour les deux cotés du signal 27, et correspondant l'ensemble des caractères ou symboles. Cette étape présente l'avantage de supprimer les décalages dans cette association des deux parties d'une même portion du signal, limitant ainsi les fausses interprétations.

Cette fusion est réalisée de préférence de la manière représentée à la figure 11. Avant la fusion, la taille médiane M d'un segment est calculée, c'est-à-dire la médiane des distances, en mm, de chaque segment présent dans les deux listes de segments à fusionner. Le processus de fusion des segmentations consiste à parcourir les deux listes de segments (bots et tops) et de résoudre les incohérences au fur et à mesure avec une série de règles. Par exemple, les deux listes de segments sont parcourues du début à la fin de manière à agréger, soit ensemble les segments similaires présents dans les deux listes, soit séparément pour les autres segments présents dans une seule liste, dans la liste de point fusionnés S. Les notions d'agrégation et de similarité sont définies ultérieurement. Les règles de sélection de segments sont les suivantes, décrites par ordre de priorité d'application décroissante, de la plus prioritaire à la moins prioritaire :

- Si les deux listes (bots, tops) contiennent toutes les deux des segments encore à traiter, on sélectionne les suivants (bot, top) :

    1- Si le bot et le top sont similaires, on agrège bot et top ensemble.
    2- Si les points de début de top et bot sont similaires et que la fin de bot est avant la fin de top, on agrège bot uniquement.
    3- Si les points de début de top et bot sont similaires et que la fin de top est avant la fin de bot, on agrège top uniquement.
    4- Si les points de fin de top et bot sont similaires, on agrège bot et top ensemble.
    5- On sélectionne entre top et bot le segment dont la distance en mm entre le point de début et le point de fin est le plus proche d'un multiple de la distance médiane de tous les segments présents dans les deux segmentations. Quand cette règle est appliquée, on ignore les autres segments dont le point de fin est situé avant le point de fin du segment sélectionné.

- Si uniquement les bots contiennent encore des segments, on les agrège un par un.
- Si uniquement les tops contiennent encore des segments, on les agrège un par un. La notion de segments similaires est définie de la manière suivante : deux segments A et B sont similaires si leurs points de début et de fin sont similaires. Un point de début ou de fin d'un segment B est similaire au point correspondant du segment A si la distance entre ces points est inférieure à un seuil. Dans un mode préféré de réalisation, ce seuil est égal à 25% de la longueur de A.

L'agrégation avec un ou deux segments pour interprétation consiste à :

- Calculer la position du nouveau point de fin P égal à la moyenne des points de fin des segments à agréger,
- Calculer la distance en mm D entre P et le dernier point ajouté à S
- Calculer la distance relative correspondante, c'est-à-dire
- Calculer l'arrondi $Dra$ à une valeur entière de $Dr$.
- Ajouter à S un nombre $Dra$ de nouveau segment. Par exemple :

    - Si $Dra$ est égal à 0, aucun segment n'est ajouté dans S.
    - Si $Dra$ est égal à 1, on ajoute à S un nouveau segment dont le point de début est le dernier point de fin ajouté à S et le point de fin est P.
    - Si $Dra$ est égal à 2, on ajoute à S deux segments successifs d'égale distance entre le dernier point de fin ajoutée dans S et le point P.

Après ce processus, la liste des segments fusionnés est nettoyée en effectuant une passe de correction pour supprimer les segments dans lesquels moins de trois pics ont été trouvés pendant l'étape de détermination de la vitesse.

L'étape d'interprétation du signal 27 après segmentation est effectuée en prenant, pour chaque segment du signal 27, une « empreinte » qui est un ensemble de N points caractéristiques.

Par exemple, pour des caractères ou symboles codés selon la norme CMC7, treize points, situés à des positions particulières entre le premier (pic1) et le dernier pic (pic7) du caractère CMC7, sont sélectionnés (figure 12). Ces points sont les positions théoriques possibles des pics dans le signal 27 issu de la tête de lecture 4. D'après la norme CMC7, on sait qu'un intervalle court mesure 0,3mm, un intervalle long mesure 0,5mm et un caractère CMC7 comporte deux intervalles longs et quatre intervalles courts, d'une longueur totale fixe de 2,2mm. La figure 12 décrit le positionnement de ces points caractéristiques. Par exemple, le caractère CMC7 « zéro » est composé des intervalles suivants : [court, court, long, long, court, court], et donc par les distances physiques en mm suivantes : [0.3, 0.3, 0.5, 0.5, 0.3, 0.3]. Les positions attendues des pics sont donc, à partir du premier pic, aux distances de [0,3, 0,6, 1,1, 1,6, 1,9] en mm, ce qui correspond aux points notés [3, 6, 11, 16, 19]. Pour l'alphabet complet CMC7, les points intéressants pour une empreinte se situent par exemple aux positions 3, 5, 6, 8, 9, 10, 11, 12, 13, 14, 16, 17, et 19. Ainsi, dans ce mode préféré de réalisation, on sélectionne dans la liste de pics, de l'étape de détermination de la vitesse, le premier et dernier pic compris dans le segment du signal 27 à interpréter. Ces deux pics sont nommés respectivement à $pic_1$ et $pic_7$. Les positions $P_n$ des valeurs intéressantes $V_n$ sont ensuite calculées grâce à la formule suivante : $P_n$ = arrondi ($pic_1$ + (n/22) x ($pic_7$ - $pic_1$)). Une fois les positions calculées, ces valeurs sont récupérées dans le signal (Figure 12) et normalisées par rapport au maximum de ces valeurs. Ces 13 valeurs constituent l'empreinte pour ce segment.

Ensuite, chaque empreinte est classifiée. De préférence, cette classification est réalisée selon la méthode du plus proche centroïde ou « Nearest Centroid Classifier ». Dans le mode de réalisation dans lequel les caractères ou symboles sont codés selon la norme CMC7, pour chaque caractère ou symbole une empreinte de référence est définie. Cette empreinte est déterminée en pratiquant des statistiques sur un ensemble important de signaux enregistrés et traités pour prendre les empreintes des caractères. Par exemple, l'empreinte type du caractère zéro T0 est donné dans le tableau 3.

Tableau 3 :

| Position $n$ | Valeur de référence $T0$ |
|---|---|
| 3 | 0,840975 |
| 5 | -0,166547 |
| 6 | 0,632933 |
| 8 | -0,182901 |
| 9 | -0,263072 |
| 10 | -0,031653 |
| 11 | 0,657316 |
| 12 | -0,088267 |
| 13 | -0,085075 |
| 14 | -0,136681 |
| 16 | 0,529545 |
| 17 | -0,480393 |
| 19 | 0,823073 |

Pour déterminer à quel caractère correspond une empreinte, on calcule la distance euclidienne entre cette empreinte et l'ensemble des empreintes types. Pour calculer cette distance pour le caractère C, on utilise la formule suivante : score = $\sum_{\text{toutes les positions } n} (TC_n - V_n)^2$. Un exemple d'une prise d'empreinte effectuée pour un caractère « zéro » est donné au tableau 4. Dans cet exemple, le score est égal à 0,16880805. Une fois le calcul du score effectué pour chaque caractère type, on sélectionne le score le plus faible ainsi que le caractère associé comme résultat de la classification.

Tableau 4

| Position $n$ | Valeur mesurée | $(T0_n - V_n)^2$ |
|---|---|---|
| 3 | 0,810594141 | 0,000923 |
| 5 | -0,152074531 | 0,00020945 |
| 6 | 0,439474136 | 0,03742633 |
| 8 | -0,22367464 | 0,00166249 |
| 9 | -0,248654038 | 0,00020788 |
| 10 | 0,2171714 | 0,06191358 |
| 11 | 0,694419146 | 0,00137664 |
| 12 | 0,025758114 | 0,01300173 |
| 13 | -0,141315475 | 0,00316299 |
| 14 | -0,219546422 | 0,00686668 |
| 16 | 0,356057316 | 0,03009798 |
| 17 | -0,50497967 | 0,0006045 |
| 19 | 0,7165141 | 0,0113548 |

De préférence, sur chaque segment du signal 27, est effectué une pluralité de prise d'empreintes, en faisant par exemple varier les paramètres suivants :

- Variation du duo de pics sélectionnés comme référence (premier et dernier, deuxième et dernier, premier et pénultième, ...)
- Ajout d'un décalage par rapport aux positions de $pic_1$ et $pic_7$ pour absorber un décalage de ces pics extrêmes.

De préférence, sur l'ensemble des prises d'empreinte, on garde le meilleur résultat d'attribution, c'est-à-dire celui avec le score le plus faible par rapport à une empreinte type.

Une fois l'attribution du caractère ou symbole aux deux cotés du segment, sont fusionnés deux à deux pour donner le résultat final en sélectionnant pour chaque segment la meilleure attribution, c'est-à-dire celle avec la distance euclidienne la plus faible.

La méthode selon l'invention peut comprendre en outre une étape de filtrage, une étape de décimation et/ou une étape de détection du signal utile.

L'étape de décimation comprend une étape de réduction de la fréquence d'échantillonnage, en sélectionnant un échantillon sur N échantillons du signal 27, N étant un entier positif, par exemple N = 4 afin d'obtenir une fréquence d'échantillonnage de 11025Hz pour une fréquence d'échantillonnage initiale de 44100 Hz.

L'étape de détection du signal utile comprend la détection et la découpe du signal 27 à la section comprenant les caractères ou symboles ayant été lus. Le découpage est de préférence réalisé par la détection du passage au-delà d'un seuil prédéfini, afin de distinguer le bruit environnant. Le signal 27 est découpé en fenêtres d'une durée supérieure à l'intervalle séparant les différents groupements de caractères ou symboles. A chaque fenêtre d'acquisition, on associe la valeur absolue maximum du signal détecté. Ces valeurs sont comparées à un seuil prédéterminé. Quand une série de fenêtres valides suffisamment longue est trouvée (tableau 1), la section correspondante du signal 27 est alors interprétée pour restituer l'information contenue dans le signal 27.

Le signal obtenu à l'issue de la détection des pics est ensuite soumis à une phase d'interprétation dans laquelle l'information, sur la forme des caractères et/ou symboles magnétiques lus, est associée à un ou plusieurs caractères ou symboles.

De préférence, la méthode selon l'invention comprend une étape de contrôle du décodage.

De préférence, pour un document bancaire, cette étape comprend le calcul d'une somme de contrôle de deux chiffres, appelée « checksum », basée sur un calcul modulo 97 de l'ensemble de la chaîne de caractères et/ou de symboles et comprend une étape de comparaison de cette somme calculée avec le chiffre apposé sur le document bancaire, préalablement communiqué par l'utilisateur de la présente méthode.

De préférence, les étapes d'amplification du signal électrique issu de la tête de lecture 4 et de conversion analogique-numérique sont réalisées au sein du dispositif 1 de lecture, alors que les étapes de filtrage, de décimation et de détection du signal utile, d'estimation de la vitesse de passage du support dans le dispositif selon l'invention, de traitement du signal 27, d'interprétation, de contrôle du décodage de transmission à un dispositif, appareil ou système distant, sont réalisées au sein du terminal mobile de communication. Toutefois, il est également possible que l'ensemble de ces étapes soit réalisé au sein du terminal mobile de communication auquel le dispositif 1 de lecture est associé.

De préférence, la méthode selon l'invention est mise en oeuvre dans le domaine bancaire pour la lecture de chèques.

**Revendications**

1. Un dispositif (1) de lecture d'une ou plusieurs informations imprimées sur un support physique sous la forme d'une chaîne de caractères et/ou de symboles magnétiques, ledit dispositif (1) comprenant :

   un boîtier (2) muni d'une fente (3) apte à recevoir ledit support,
   une tête de lecture magnétique (4), apte à lire ladite chaîne de caractères et/ou de symboles magnétiques lors du passage manuel dudit support dans ladite fente (3), ladite tête de lecture (4) générant un signal électrique (27), comprenant des pics d'intensité, image desdits caractères et/ou symboles magnétiques,
   des moyens (5) de connexion à un terminal mobile de communication,
   **caractérisé en ce que**
   ledit dispositif (1) de lecture comprend des moyens de restitution de ladite ou lesdites information(s), à partir dudit signal électrique (27), les moyens de restitution comprenant des moyens d'estimation de la vitesse de passage desdits caractères et/ou symboles magnétiques devant ladite tête de lecture (4) à partir dudit signal électrique (27).

2. Le dispositif (1) selon la revendication 1, dans lequel les moyens de restitution de l'information ou des informations imprimées sur le support comprennent en outre des moyens de traitement comprenant des moyens de segmentation du signal électrique (27) en une pluralité de segments correspondant à un caractère ou symbole lu et des moyens d'interprétation dudit signal électrique (27) attribuant auxdits segments le caractère ou symbole lui correspondant effectivement.

3. Le dispositif (1) selon la revendication 2, dans lequel les moyens d'interprétation du signal (27) évaluent statistiquement la correspondance la plus fiable à des empreintes de référence du ou des caractères et/ou symboles.

4. Le dispositif (1) selon la revendication 3, dans lequel l'empreinte comprend un ensemble de points caractéristiques de l'ensemble des pics d'intensité formant le segment du signal électrique (27).

5. Le dispositif (1) selon l'une quelconque des revendications précédentes, dans lequel le support comprend une chaîne de caractères et/ou de symboles magnétiques du type CMC7.

6. Le dispositif (1) selon l'une quelconque des revendications précédentes comprenant un élément (7), faisant saillie dans la fente (3) du boiter (2) et faisant office de ressort pour mettre en contact la partie du support physique comprenant la chaîne de caractères et/ou de symboles magnétiques avec la tête de lecture (4).

7. Un terminal mobile de communication connecté à ou comprenant un dispositif (1) de lecture d'une ou plusieurs informations imprimées sur un support physique sous la forme d'une chaîne de caractères et/ou de symboles magnétiques, ledit dispositif comprenant un boîtier (2) muni d'une fente (3) apte à recevoir ledit support, une tête de lecture magnétique (4), apte à lire ladite chaîne de caractères et/ou de symboles magnétiques lors du passage manuel dudit support dans ladite fente (3), ladite tête de lecture (4) générant un signal électrique (27), comprenant des pics d'intensité, image desdits caractères et/ou symboles magnétiques, des moyens (5) de connexion audit terminal mobile, ledit terminal mobile et/ou ledit dispositif (1) comprenant des moyens de restitution de l'information ou des informations imprimées sur ledit support physique, les moyens de restitution comprenant des moyens d'estimation de la vitesse du passage desdits caractères et/ou symboles magnétiques devant ladite tête de lecture (4) à partir dudit signal électrique (27).

8. Méthode de restitution d'une ou plusieurs informations imprimées sur un support physique sous la forme d'une chaîne de caractères et/ou de symboles magnétiques comprenant les étapes suivantes :

- prendre un dispositif (1) de lecture d'une ou plusieurs informations imprimées sur un support physique sous la forme d'une chaîne de caractères et/ou de symboles magnétiques, ledit dispositif comprenant un boîtier (2) muni d'une fente (3) apte à recevoir ledit support, une tête de lecture magnétique (4), apte à lire ladite chaîne de caractères et/ou de symboles magnétiques lors du passage manuel dudit support dans ladite fente (3), ladite tête de lecture (4) étant apte à générer un signal électrique (27), comprenant des pics d'intensité, image desdits caractères et/ou symboles magnétiques, et des moyens (5) de connexion à un terminal mobile,
- prendre un terminal mobile de communication, apte à communiquer avec un ou plusieurs réseaux informatiques et/ou téléphoniques,
- connecter ledit dispositif (1) avec ledit terminal mobile de communication,
- prendre un support physique comprenant une ou plusieurs informations enregistrées sous la forme d'une chaîne de caractères et/ou de symboles magnétiques,
- passer manuellement ledit support dans la fente (3) et devant la tête de lecture (4) dudit dispositif (1) de lecture, pour générer un signal électrique (27), comprenant des pics d'intensité, image desdits caractères et/ou symboles magnétiques,
- restituer ladite ou lesdites information(s) comprise(s) dans ledit signal (27) en estimant, à partir dudit signal électrique (27), la vitesse de passage des caractères et/ou symboles magnétiques devant ladite tête de lecture (4).

9. La méthode selon la revendication 8, dans laquelle l'étape de restitution de l'information ou les informations comprise(s) dans le signal électrique (27) comprend une étape de traitement dudit signal électrique (27) comprenant sa segmentation en une pluralité de segments correspondant à un caractère ou symbole lu et une étape d'interprétation dudit signal électrique (27) en attribuant auxdits segments le caractère ou symbole lui correspondant effectivement.

10. La méthode selon les revendications 8 ou 9, dans laquelle l'étape d'estimation de la vitesse de passage des caractères et/ou symboles magnétiques devant ladite tête de lecture (4) se fait en déterminant la vitesse locale au niveau d'un ou plusieurs pics du signal électrique (27), le filtrage desdits pics dudit signal électrique (27) afin d'obtenir un signal filtré, puis en déterminant une nouvelle vitesse locale au niveau d'un ou plusieurs pics du signal filtré pour obtenir un nouveau signal filtré, les étapes de détermination de la vitesse locale et de filtrage du signal électrique (27) étant réalisées une multitude de fois.

**11.** La méthode selon la revendication 9 dans laquelle l'étape de l'interprétation du signal électrique (27) comprend la segmentation dudit signal électrique (27) en une pluralité de segments correspondants à un caractère ou symbole lu, la prise d'une empreinte, pour chaque segment, et la comparaison de ladite empreinte à des empreintes de référence du ou des caractères et/ou symboles.

**12.** La méthode selon la revendication 11, dans laquelle l'empreinte est un ensemble de points caractéristiques de l'ensemble des pics d'intensité formant le segment du signal électrique (27).

**13.** La méthode selon l'une quelconque des revendications 8 à 12, dans laquelle les caractères et/ou symboles magnétiques sont du type CMC7.

**14.** La méthode selon l'une quelconque des revendications 8 à 13, comprenant en outre une étape de guidage du support à lire vers la tête de lecture (4) du dispositif (1) de lecture.

**15.** La méthode selon l'une quelconque des revendications 8 à 14 dans laquelle l'étape de restitution de l'information ou des informations est mise en oeuvre par le dispositif (1) de lecture et/ou par le terminal mobile de communication.

## Patentansprüche

**1.** Vorrichtung (1) zum Ablesen einer oder mehrerer Informationen, die auf einem physischen Träger in Form einer magnetischen Zeichen- und/oder Symbolabfolge gedruckt sind, wobei die Vorrichtung (1) umfasst:

ein Gehäuse (2) mit einem Schlitz (3), der zur Aufnahme des Trägers geeignet ist,
einen magnetischen Lesekopf (4), der zum Ablesen der magnetischen Zeichen- und/oder Symbolabfolge geeignet ist, wenn der Träger händisch in den Schlitz (3) eingeführt wird, wobei der Lesekopf (4) ein elektrisches Signal (27) erzeugt, das Intensitätspeaks enthält, in denen die magnetischen Zeichen und/oder Symbole abgebildet sind, Mittel (5) zum Anschluss an ein mobiles Datenübertragungsendgerät, **dadurch gekennzeichnet, dass**
die Vorrichtung (1) Mittel zur Wiederherstellung der Information(en) anhand des elektrischen Signals (27) umfasst, wobei die Wiederherstellungsmittel Mittel zur Abschätzung der Durchlaufgeschwindigkeit der magnetischen Zeichen und/oder Symbole vor dem Lesekopf (4) auf der Grundlage des elektrischen Signals (27) umfassen.

**2.** Vorrichtung (1) nach Anspruch 1, wobei die Mittel zur Wiederherstellung der auf dem Träger gedruckten Information(en) ferner umfassen: Verarbeitungsmittel, umfassend Mittel zur Aufteilung des elektrischen Signals (27) in eine Mehrzahl Segmente, die einem abgelesenen Zeichen bzw. Symbol entsprechen, und Mittel zur Interpretation des elektrischen Signals (27), die den Segmenten das ihm tatsächlich entsprechende Zeichen bzw. Symbol zuordnen.

**3.** Vorrichtung (1) nach Anspruch 2, wobei die Mittel zur Interpretation des Signals (27) statistisch die zuverlässigste Übereinstimmung mit Referenzaufnahmen des mindestens einen Zeichens und/oder Symbols bewerten.

**4.** Vorrichtung (1) nach Anspruch 3, wobei die Aufnahme eine Reihe von Punkten umfasst, die für die Intensitätspeaks, die das Segment des elektrischen Signals (27) bilden, insgesamt charakteristisch sind.

**5.** Vorrichtung (1) nach einem der vorstehenden Ansprüche, wobei der Träger eine magnetische Zeichen- und/oder Symbolabfolge vom Typ CMC7 umfasst.

**6.** Vorrichtung (1) nach einem der vorstehenden Ansprüche, umfassend ein Element (7), das im Schlitz (3) des Gehäuses (2) hervorsteht und als Feder zur Herstellung eines Kontakts zwischen dem Teil des physischen Trägers, der die magnetische Zeichen- und/oder Symbolabfolge umfasst, und dem Lesekopf (4) fungiert.

**7.** Mobiles Datenübertragungsendgerät, das eine Vorrichtung (1) zum Ablesen einer oder mehrerer Informationen, die auf einem physischen Träger in Form einer magnetischen Zeichen- und/oder Symbolabfolge gedruckt sind, umfasst oder dieser angeschlossen ist, wobei die Vorrichtung umfasst: ein Gehäuse (2) mit einem Schlitz (3), der zur Aufnahme des Trägers geeignet ist, einen magnetischen Lesekopf (4), der zum Ablesen der magnetischen Zeichen- und/oder Symbolabfolge geeignet ist, wenn der Träger händisch in den Schlitz (3) eingeführt wird, wobei der Lesekopf (4) ein elektrisches Signal (27) erzeugt, das Intensitätspeaks enthält, in denen die magnetischen Zeichen und/oder Symbole abgebildet sind, Mittel (5) zum Anschluss an das mobile Datenübertragungsendgerät, wobei das mobile Endgerät und/oder die Vorrichtung (1) Mittel zur Wiederherstellung der auf dem physischen Träger gedruckten Information(en) umfasst/umfassen, wobei die Wiederherstellungsmittel Mittel zur Abschätzung der Durchlaufgeschwindigkeit der magnetischen Zeichen und/oder Symbole vor dem Lesekopf (4) auf der Grundlage des elektrischen Signals (27) umfassen.

8. Verfahren zum Wiederherstellen einer oder mehrerer Informationen, die auf einem physischen Träger in Form einer magnetischen Zeichen- und/oder Symbolabfolge gedruckt sind, umfassend die Schritte:

   - Vorsehen einer Vorrichtung (1) zum Ablesen einer oder mehrerer Informationen, die auf einem physischen Träger in Form einer magnetischen Zeichen- und/oder Symbolabfolge gedruckt sind, wobei die Vorrichtung umfasst: ein Gehäuse (2) mit einem Schlitz (3), der zur Aufnahme des Trägers geeignet ist, einen magnetischen Lesekopf (4), der zum Ablesen der magnetischen Zeichen- und/oder Symbolabfolge geeignet ist, wenn der Träger händisch in den Schlitz (3) eingeführt wird, wobei der Lesekopf (4) geeignet ist, ein elektrisches Signal (27) zu erzeugen, das Intensitätspeaks enthält, in denen die magnetischen Zeichen und/oder Symbole abgebildet sind, und Mittel (5) zum Anschluss an das mobile Datenübertragungsendgerät,
   - Vorsehen eines mobilen Datenübertragungsendgeräts, das zum Kommunizieren mit mindestens einem Daten- und/oder Telefonnetz geeignet ist,
   - Anschließen der Vorrichtung (1) an das mobile Datenübertragungsendgerät,
   - Vorsehen eines physischen Trägers, der mindestens eine aufgezeichnete Information in Form einer magnetischen Zeichen- und/oder Symbolabfolge umfasst,
   - händisches Einführen des Trägers in den Schlitz (3) und vor den Lesekopf (4) der Vorrichtung (1), um ein elektrisches Signal (27) zu erzeugen, das Intensitätspeaks umfasst, in denen die magnetischen Zeichen und/oder Symbole abgebildet sind,
   - Wiederherstellen der im Signal (27) enthaltenen Information(en) durch Abschätzen der Durchlaufgeschwindigkeit der magnetischen Zeichen und/oder Symbole vor dem Lesekopf (4) anhand des elektrischen Signals (27).

9. Verfahren nach Anspruch 8, wobei der Schritt des Wiederherstellens der im elektrischen Signal (27) enthaltenen Information(en) einen Schritt des Verarbeitens des elektrischen Signals (27) umfasst, das dessen Aufteilung in eine Mehrzahl Segmente, die einem abgelesenen Zeichen bzw. Symbol entsprechen, sowie die Interpretation des elektrischen Signals (27) durch Zuordnen der Segmente zum Zeichen bzw. Symbol, das ihnen jeweils tatsächlich entspricht, umfasst.

10. Verfahren nach Anspruch 8 oder 9, wobei das Abschätzen der Durchlaufgeschwindigkeit der magnetischen Zeichen und/oder Symbole vor dem Lesekopf (4) durch Ermitteln der lokalen Geschwindigkeit auf Höhe eines oder mehrerer Peaks des elektrischen Signals (27), Filtern der Peaks des elektrischen Signals (27), um ein gefiltertes Signal zu erhalten, und anschließend durch Ermitteln einer neuen lokalen Geschwindigkeit auf Höhe eines oder mehrere Peaks des gefilterten Signals, um ein neues gefiltertes Signal zu erhalten, erfolgt, wobei die Schritte des Ermittelns der lokalen Geschwindigkeit und des Filterns des elektrischen Signals (27) mehrfach ausgeführt werden.

11. Verfahren nach Anspruch 9, wobei der Schritt des Interpretierens des elektrischen Signals (27) umfasst: Aufteilen des elektrischen Signals (27) in eine Mehrzahl Segmente, die einem abgelesenen Zeichen bzw. Symbol entsprechen, Vorsehen einer Aufnahme jedes Segments und Vergleichen der Aufnahme mit Referenzaufnahmen der Zeichen und/oder Symbole.

12. Verfahren nach Anspruch 11, wobei die Aufnahme eine Reihe von Punkten umfasst, die für die Intensitätspeaks, die das Segment des elektrischen Signals (27) bilden, insgesamt charakteristisch sind.

13. Verfahren nach einem der Ansprüche 8 bis 12, wobei die magnetischen Zeichen und/oder Symbole vom Typ CMC7 sind.

14. Verfahren nach einem der Ansprüche 8 bis 13, ferner umfassend Führen des abzulesenden Trägers hin zum Lesekopf (4) der Vorrichtung (1).

15. Verfahren nach einem der Ansprüche 8 bis 14, wobei der Schritt des Wiederherstellens der Information(en) durch die Vorrichtung (1) und/oder das mobile Datenübertragunsendgerät ausgeführt wird.

**Claims**

1. A device (1) for reading one or several information printed on a physical medium in the form of a chain of magnetic characters and/or symbols, said device (1) comprising:

   a housing (2) provided with a slot (3) able to receive said medium,
   a magnetic reading head (4), able to read said chain of magnetic characters and/or symbols during the manual passage of said medium in said slot (3), said reading head (4) generating an electrical signal (27), comprising intensity peaks, image of said magnetic characters and/or symbols,
   means (5) for connecting to a mobile command communication terminal,
   **characterized in that**
   said reading device (1) comprises means for retrieving said one or several information, from said electrical signal (27), the retrieval means comprising means for estimating the passage speed of said magnetic characters and/or symbols in front of said reading head (4) from said electrical signal (27).

2. The device (1) according to claim 1, wherein the means for retrieving said one or several information printed on the medium further comprise processing means comprising means for segmenting the electrical signal (27) into a plurality of segments corresponding to a read character or symbol and means for interpreting said electrical signal (27) assigning said segments the character or symbol actually corresponding to it.

3. The device (1) according to claim 2, wherein the means for interpreting the signal (27) statistically evaluate the most reliable correspondence to reference imprints of the character(s) and/or symbol(s).

4. The device (1) according to claim 3, wherein the imprint comprises a set of characteristic points of the set of intensity peaks forming the segment of the electrical signal (27).

5. The device (1) according to any one of the preceding claims, wherein the medium comprises a chain of magnetic characters and/or symbols of type CMC7.

6. The device (1) according to any one of the preceding claims comprising an element (7), protruding in the slot (3) of the housing (2) and serving as a spring to place the part of the physical medium comprising the chain of magnetic characters and/or symbols in contact with the reading head (4).

7. A mobile communication terminal connected to or comprising a device (1) for reading one or several information printed on a physical medium in the form of a chain of magnetic characters and/or symbols, said device comprising a housing (2) provided with a slot (3) able to receive said medium, a magnetic reading head (4), able to read said chain of magnetic characters and/or symbols during the manual passage of said medium in said slot (3), said reading head (4) generating an electrical signal (27), comprising intensity peaks, image of said magnetic characters and/or symbols, means (5) for connecting to said mobile terminal, said mobile terminal and/or said device (1) comprising means for retrieving said one or several information printed on said physical medium, said retrieval means comprising means for estimating the passage speed of said magnetic character(s) and/or symbol(s) in front of said reading head (4) from said electrical signal (27).

8. A method for retrieving one or several information printed on a physical medium in the form of a chain of magnetic characters and/or symbols comprising the following steps:

   - taking a device (1) for reading one or several information printed on a physical medium in the form of a chain of magnetic characters and/or symbols, said device comprising a housing (2) provided with a slot (3) able to receive said medium, a magnetic reading head (4) able to read said chain of magnetic characters and/or symbols during the manual passage of said medium in said slot (3), said reading head (4) being able to generate an electrical signal (27), comprising intensity peaks, image of said magnetic characters and/or symbols, and means (5) for connecting to a mobile terminal,
   - taking a mobile communication terminal, able to communicate with one or several computer and/or telephone networks,
   - connecting said device (1) with said mobile communication terminal,

- taking a physical medium comprising one or several pieces of information recorded in the form of a chain of magnetic characters and/or symbols,
- manually passing said medium in the slot (3) and in front of the reading head (4) of said reading device (1), in order to generate an electrical signal (27), comprising intensity peaks, image of said magnetic characters and/or symbols,
- retrieving said one or several information comprised in said signal (27) by estimating, from said electrical signal (27), the passage speed of the magnetic character(s) and/or symbol(s) in front of said reading head (4).

9. The method according to claim 8, wherein the step for retrieving said one or several information from the electrical signal (27) comprises a step of processing said electrical signal (27) comprising segmenting it into a plurality of segments corresponding to a read character or symbol and a step of interpreting said electrical signal (27) by assigning said segments the character or symbol actually corresponding to it.

10. The method according to claims 8 or 9, wherein the step for estimating the passage speed of the magnetic characters and/or symbols in front of said reading head (4) is done by determining the local speed at one or several peaks of the electrical signal (27), filtering said peaks of said electrical signal (27) in order to obtain a filtered signal, then determining a new local speed at one or several peaks of the filtered signal in order to obtain a new filtered signal, the steps of determining the local speed and filtering the electrical signal (27) being carried out multiple times.

11. The method according to claim 9, wherein the step for interpreting the electrical signal (27) comprises segmenting said electrical signal (27) into a plurality of segments corresponding to a read character or symbol, taking an imprint, for each segment, and comparing said imprint to reference imprints of the character(s) and/or symbol(s).

12. The method according to claim 11, wherein the imprint is a set of characteristic points of the set of intensity peaks forming the segment of the electrical signal (27).

13. The method according to any one of claims 8 to 12, wherein the magnetic characters and/or symbols are of type CMC7.

14. The method according to any one of claims 8 to 13, further comprising a step for guiding the medium to be read toward the reading head (4) of the reading device (1).

15. The method according to any one of claims 8 to 14, wherein the step for retrieving the one or several information is carried out by the reading device (1) and/or by the mobile communication terminal.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

## RÉFÉRENCES CITÉES DANS LA DESCRIPTION

**Documents brevets cités dans la description**

- EP 1993077 A
- US 5054092 A
- US 20120008851 A